# EUROPÄISCHE PATENTSCHRIFT

(11) **EP 2 863 610 B1**
(45) Veröffentlichungstag und Bekanntmachung des Hinweises auf die Patenterteilung: **04.04.2018**
(21) Anmeldenummer: 14187806.6
(22) Anmeldetag: 06.10.2014
(51) Int. Cl.: H04L 29/06, H04L 9/30, G06F 21/64, H04L 9/32

(54) **Verfahren und System zum manipulationssicheren Bereitstellen mehrerer digitaler Zertifikate für mehrere öffentliche Schlüssel eines Geräts**
Method and system for tamper-proof provision of multiple digital certificates for multiple public keys of a device
Procédé et système inviolables de mise à disposition de plusieurs certificats numériques pour plusieurs clés publiques d'un appareil

(30) Priorität: 17.10.2013 DE 102013221159
(43) Veröffentlichungstag der Anmeldung: 22.04.2015
(73) Patentinhaber: Siemens Aktiengesellschaft, 80333 München (DE)
(72) Erfinder: Bußer, Jens-Uwe, 85579 Neubiberg (DE)

(56) Entgegenhaltungen:
- EP-A1- 1 881 665
- US-A1- 2006 168 443
- NYSTROM B KALISKI RSA SECURITY M: "PKCS #10: Certification Request Syntax Specification Version 1.7; rfc2986.txt", 20001101, 1. November 2000 (2000-11-01), XP015008769, ISSN: 0000-0003

## Beschreibung

Die Erfindung betrifft ein Verfahren zum manipulationssicheren Bereitstellen mehrerer digitaler Zertifikate für mehrere öffentliche Schlüssel eines Geräts durch eine Zertifizierungsstelle, sowie ein Gerät, eine Zertifizierungsstelle, ein System sowie ein Computerprogramm und einen Datenträger zur Ausführung des Verfahrens.

In modernen Datennetzen beruht die Übertragungssicherheit üblicherweise auf dem Einsatz kryptographischer Verfahren, beispielsweise auf Verschlüsselung zur Gewährleistung der Vertraulichkeit, oder auf mit Hash-Funktionen berechnete Nachrichten-Authentifizierung-Codes (HMAC) oder digitalen Signaturen zur Gewährleistung des Integritätsschutzes und der Authentizität. Für jedes dieser Verfahren sind kryptographische Parameter notwendig. Für die Verfahren werden häufig asymmetrische Verfahren verwendet, bei denen für einen Sender und einen Empfänger jeweils unterschiedliche Schlüssel verwendet werden. Dabei wird ein privater Schlüssel, der geheim gehalten werden muss, zum Signieren von zu sendenden Nachrichten und zum Entschlüsseln von empfangenen Nachrichten verwendet, ein dazu passender öffentlicher Schlüssel wird zum Verifizieren von empfangenen Nachrichten sowie zum Verschlüsseln von zu sendenden Nachrichten verwendet.

Die öffentlichen Schlüssel werden dazu meist in Form eines digitalen Zertifikats, welches den Schlüssel an Daten eines Anwenders bindet, veröffentlicht. Ein solches digitales Zertifikat wird von einer vertrauenswürdigen Stelle, beispielsweise einer Zertifizierungsstelle, erstellt. Die Gültigkeit kann mit Hilfe des öffentlichen Schlüssels der Zertifizierungsstelle geprüft werden, der ebenfalls in Form eines Zertifikats veröffentlicht und beispielsweise in Betriebssystem, Web-Browser oder einer Anwendung integriert wurde.

Schlüsselpaare und Zertifikate der Endanwender können beispielsweise direkt von der Zertifizierungsstelle erzeugt und dann an die Anwender bzw. deren Geräte verteilt werden. Bei dieser Verteilung muss der private Schlüssel allerdings gegen unbefugtes Bekanntwerden zuverlässig geschützt werden. Um den privaten Schlüssel nicht der Gefahr einer - womöglich sogar unbemerkten - Offenlegung während des Transports auszusetzen, kann das Schlüsselpaar lokal im Gerät des Anwenders erzeugt werden. Dann muss nur der öffentliche Schlüssel zur Zertifizierungsstelle transportiert werden, der private Schlüssel verbleibt dagegen allzeit nur im Gerät. Zertifikate hingegen können beliebig transportiert und verteilt werden, da sie keine vertraulichen Daten enthalten und durch die Signatur der Zertifizierungsstelle gegen jede Veränderung zuverlässig geschützt sind.

Für den Transport des öffentlichen Schlüssels sowie der zugehörigen Anwenderdaten von der lokalen Erzeugungsstelle zur Zertifizierungsstelle ist eine Signierungsanforderung, auch Certificate Signing Request (CSR) genannt, als spezielles Datenformat entwickelt und als kryptographischer Standard für öffentliche Schlüssel PKCS#10 definiert und in einem Standardisierungsdokument RFC2986 der Internet Engineering Task Force (IETF) beschrieben. Die Signierungsanforderung ist vom Ersteller mit dessen privaten Schlüssel "selbst signiert". Die Zertifizierungsstelle kann damit bei Erhalt aber nur prüfen, ob der Ersteller in Besitz des zum enthaltenen öffentlichen Schlüssel passenden privaten Schlüssels ist. Eine Prüfung, ob die in der Signierungsanforderung enthaltenen Anwenderdaten korrekt sind, ist damit nicht möglich. Daher ist es sehr wichtig, dass Signierungsanforderungen von der Zertifizierungsstelle nur dann akzeptiert werden, wenn sie korrekt erstellt und authentisch übertragen wurden. Gelingt es einem Angreifer mit einer eigenen, selbst erstellten Signierungsanforderung mit fremden Anwenderdaten, von der Zertifizierungsstelle ein Zertifikat zu erhalten, so kann er gegenüber anderen Kommunikationspartnern eine falsche Identität vortäuschen, und im Namen eines anderen Anwenders Daten signieren sowie an vertrauliche Daten gelangen, die eigentlich für einen anderen Anwender bestimmt waren.

In der WO 2012/016859 A1 wird beispielsweise ein Verfahren und eine Vorrichtung zur manipulationssicheren Bereitstellung eines Zertifikats beschrieben, bei dem eine Zertifizierungsstelle das Zertifikat einem Gerät nur dann bereitstellt, falls eine vom Gerät empfangene Signalisierungsnachricht anhand eines Einmalpasswortes erfolgreich verifiziert wird. Das Einmalpasswort wird dabei vorher von der Zertifizierungsstelle an das Gerät, beispielsweise mittels eines Datenträgers an den Nutzer, übermittelt. Nachteilig daran ist jedoch, dass dieses Verfahren eine aufwendige Verteilung des Einmalpassworts zwischen Zertifizierungsstelle und Gerät erfordert.

Häufig ist es von Vorteil, wenn für ein Gerät mit mehreren Anwendungen für jede Anwendung ein unterschiedliches Schlüsselpaar verwendet wird. Beispielsweise kann ein erstes Schlüsselpaar zur Ver- und Entschlüsselung von Daten, sowie ein zweites Schlüsselpaar für Signaturen verwendet werden. Der private Schlüssel zum Entschlüsseln kann dann in einer Sicherungsdatenbank (Recovery-Datenbank) abgelegt werden, damit er bei Verlust wieder hergestellt werden kann und der Anwender auf seine verschlüsselten Daten wieder zugreifen kann. Der private Signatur-Schlüssel braucht nicht und darf nicht in der Recovery-Datenbank abgelegt werden. Stattdessen wird bei Verlust ein neues Paar an Signaturschlüsseln erzeugt, mit dem zukünftige Signaturen erzeugt und geprüft werden. Bereits vorher erzeugte Signaturen können weiterhin mit dem alten öffentlichen Schlüssel geprüft werden.

Die Verwendung mehrerer Schlüsselpaare pro Gerät wird teilweise auch durch Standards gefordert. So verlangt beispielsweise die technische Richtlinie TR-03109 des deutschen Bundesamtes für Sicherheit in der Informationstechnik (BSI), dass ein zukünftiges Smart Metering Gateway je ein Schlüsselpaar für die sichere Kommunikation unter Verwendung des TLS-Protokolls, ein weiteres Schlüsselpaar für Signaturen der Messdaten und ein drittes Schlüsselpaar für die Ende-zu-Ende-Verschlüsselung der übertragenen Daten verwenden muss.

Es ist daher die Aufgabe der Erfindung, eine einfache Methode zur Anforderung von Zertifikaten insbesondere für mehrere öffentliche Schlüssel eines Gerätes zu schaffen, die ohne die Verteilung zusätzlicher Parameter, wie beispielsweise Einmalpasswörter auskommt und zusätzlich die Manipulierung von Signierungsanforderungsmaßnahmen einfach erkennt.

Die Aufgabe wird durch die in den unabhängigen Ansprüchen beschriebenen Maßnahmen gelöst. In den Unteransprüchen sind vorteilhafte Weiterbildungen der Erfindung dargestellt.

Das erfindungsgemäße Verfahren zum manipulationssicheren Bereitstellen mehrerer digitaler Zertifikate für mehrere öffentliche Schlüssel eines Geräts durch eine Zertifizierungsstelle, weist die folgenden Verfahrensschritte auf. Zunächst wird für jeden von mehreren öffentlichen Schlüsseln jeweils eine Signierungsanforderung zur Anforderung eines digitalen Zertifikats erstellt. Dabei erfolgt das Signieren der Signierungsanforderung für den i-ten öffentlichen Schlüssel mit dem j-ten privaten Schlüssel nach einer Signierungsregel, wobei der j-te private Schlüssel ungleich dem zum i-ten öffentlichen Schlüssel gehörenden i-ten privaten Schlüssel ist. Im nächsten Verfahrensschritt erfolgt das Senden aller Signierungsanforderungen an eine jeweils gleiche Zertifizierungsstelle und das Verifizieren jeder Signierungsanforderung in der Zertifizierungsstelle, wobei geprüft wird, ob die i-te Signierungsanforderungsnachricht mit dem j-ten privaten Schlüssel gemäß der Signierungsregel signiert ist.

Durch die Signierung der Signierungsanforderung für den i-ten öffentlichen Schlüssel mit einem j-ten privaten Schlüssel, der nicht zum i-ten öffentlichen Schlüssel gehört, kann die Zertifizierungsstelle leicht erkennen, wenn eine oder mehrere Signierungsanforderungen abgefangen und von einem Angreifer durch dessen manipulierte Signierungsanforderung bzw. - anforderungen ersetzt wurde bzw. wurden. Zur Gewährleistung dieser Manipulationssicherheit ist kein Austausch oder Verteilen zusätzlicher Passwörter zwischen Gerät und Zertifizierungsstelle notwendig.

Besonders vorteilhaft ist es, wenn in einem zusätzlichen Verfahrensschritt jeweils ein digitales Zertifikat für alle der mehreren öffentlichen Schlüssel nur und erst dann ausgestellt wird, wenn alle Signierungsanforderungen positiv verifiziert wurden. Bereits eine negativ verifizierte Signierungsanforderung weist auf eine erfolgte Manipulation in einer oder mehreren der Signierungsanforderungen dieses Gerätes hin. In diesem Fall werden zumindest einige oder alle Signierungsanforderungen dieses Gerätes von der Zertifizierungsstelle verworfen, und nach Bedarf weitere Maßnahmen eingeleitet.

In einer vorteilhaften Ausführungsform wird als Signierungsregel jeweils die i-te Signierungsanforderung beispielsweise zyklisch oder antizyklisch oder in anderer Weise vertauscht mit dem j-ten privaten Schlüssel signiert. Durch diese Signierungsregel sind alle Signierungsanforderungen CSR_i eines Gerätes miteinander gekoppelt und bilden keine disjunkten Teilgruppen. Diese Signierungsregel kann in wenigen Programmzeilen implementiert werden. Daher ist der Bedarf an zusätzlicher Speicherkapazität im Gerät und in der Zertifizierungsstelle durch Vergrößerung des Programms vernachlässigbar gering. Eventuell könnte durch eine längere Speicherung von Anforderungsnachrichten in der Zertifizierungsstelle ein größerer Speicher benötigt werden, wenn die Zertifizierungsstelle abwartet, bis alle Signierungsanforderungen eines Gerätes vorliegen, und sie dann gemeinsam prüft. Aufgrund einer typischerweise geringen Größe der Signierungsanforderungen von nur etwa 300 bis 1000 Byte und einer typischen Größe heutzutage verwendeter, persistenter Datenspeicher von mindestens mehreren Hundert Gigabyte ist dieser Mehrbedarf ebenfalls vernachlässigbar gering. Werden die Signierungsanforderungen in der Zertifizierungsstelle zudem erst nach Prüfung durch einen menschlichen Anwender zur weiteren Bearbeitung freigegeben, dann müssen sie auch nach dem herkömmlichen Verfahren entsprechend lange gespeichert werden. Da für jedes angeforderte Zertifikat nur eine Signierungsanforderung auf dem Gerät lokal erstellt und diese dort auch nur einmal signiert wird und da weiterhin für jede Signierungsanforderung auch nur eine Signatur von der Zertifizierungsstelle geprüft wird, ist der Rechenaufwand für kryptographische Operationen gegenüber dem herkömmlichen Verfahren mit selbstsignierten Signierungsanforderungen nicht erhöht und keine Vergrößerung der Prozessorlast der beteiligten Geräte notwendig.

In einer vorteilhaften Ausführungsform werden die Signierungsanforderungen jeweils mit einer zufälligen Wartezeit zueinander beabstandet an die Zertifizierungsstelle versandt. Dies erschwert es einem Angreifer, alle zueinander gehörenden, durch die vertauschten Signaturen gekoppelten Signierungsanforderungsnachrichten eines Gerätes zu unterdrücken und durch gefälschte Signierungsanforderungen mit seinen eigenen Schlüsseln zu ersetzen.

Es ist eine weitere vorteilhafte Ausbildung der Erfindung, wenn die Signierungsanforderungen jeweils auf unterschiedlichen Kommunikationswegen zur Zertifizierungsstelle versandt werden. Dies erschwert es weiter, die Signierungsanforderungsnachrichten abzufangen und zu manipulieren. Dies ist insbesondere dann der Fall, wenn z.B. aus Redundanzgründen mehrere Übertragungsnetze, beispielsweise ein Mobilfunknetz wie UMTS oder eine Festnetz mit beispielsweise einem digitalen Teilnehmeranschluss (DSL) zur Verfügung stehen.

In einer vorteilhaften Ausführungsform sendet die Zertifizierungsstelle die angeforderten Zertifikate in einer gemeinsamen Nachricht an das Gerät zurück. Dies spart Übertragungsbandbreite ein ohne die Sicherheit zu gefährden, da die Zertifikate durch die Signatur der Zertifizierungsstelle bereits gegen unerwünschte Veränderung geschützt sind.

In einer alternativen Ausführungsform sendet die Zertifizierungsstelle die angeforderten Zertifikate in mehreren Nachrichten getrennt an das Gerät zurück. Werden einige der Zertifikate beispielsweise durch fehlerhafte Übertragung beschädigt und als ungültig erkannt, so ist es ausreichend, nur diese Zertifikate erneut zu übertragen.

In einer weiteren Ausführungsform ist die Anzahl der Signierungsanforderungen, die von einem einzigen Gerät gesendet werden, der Zertifizierungsstelle bekannt und/oder die Anzahl der Signierungsanforderungen wird der Zertifizierungsstelle mitgeteilt. Insbesondere bei einer für jedes Gerät im Gesamtsystem gleichen Anzahl von Signierungsanforderungen, kann die bei einer für diese Geräte zuständigen Zertifizierungsstelle die Anzahl der Signierungsanforderungen fest vorgegeben sein, so dass im Weiteren die Signierungsanforderungen ohne weitere Parameter an die Zertifizierungsstelle gesandt werden können. Alternativ wird die Anzahl der Signierungsanforderungen in mindestens einer Signierungsanforderung vom Gerät an die Zertifizierungsstelle übertragen. Durch das Mitteilen der Anzahl der Signierungsanforderungen in mindestens einer Signierungsanforderung kann eine Zertifizierungsstelle für Geräte auf Anforderung unterschiedlich viele Zertifikate ausstellen und ist somit für unterschiedliche Gerätearten flexibel einsetzbar.

In einer weiteren Ausführungsform ist die angewandte Signierungsregel der Zertifizierungsstelle bekannt und/oder wird der Zertifizierungsstelle mitgeteilt.

In einer weiteren vorteilhaften Ausführungsform wird die Anzahl der Signierungsanforderungen und/oder die Signierungsregel in mindestens einer Signierungsanforderungsnachricht vom Gerät an die Zertifizierungsstelle übertragen.

In einer weiteren vorteilhaften Ausführungsform löst die Zertifizierungsstelle einen Alarm aus, wenn mindestens eine Signierungsanforderung nicht positiv verifiziert wurde. Durch den Alarm können die Zertifizierungsstelle und/oder weitere Instanzen, wie das Gerät oder auch eine übergeordnete Kontrolleinheit, auf eine mögliche Manipulation der Signierungsanforderungen aufmerksam gemacht werden. Es können dann automatisiert entsprechende Maßnahmen ergriffen werden, beispielsweise das Erzeugen eines Eintrags in einer Protokollierungsdatei, das zeitweise oder dauerhafte Sperren von Netzwerkverbindungen und von Funktionen wie Zertifikatserstellung, und/oder die direkte Alarmierung eines menschlichen Bedieners über Email, SMS, IMS oder einen ähnlichen Dienst.

In einer weiteren Variante wird bei einer negativ verifizierten Signierungsanforderung eine Ausstellung mindestens des zugehörigen digitalen Zertifikats durch die Zertifizierungsstelle verweigert. Dies erlaubt es trotz negativer Verifizierung Zertifikate für das sendende Gerät auszustellen und ermöglicht diesem Gerät zumindest teilweise einen sicheren Betrieb.

In einer weiteren Variante der vorliegenden Erfindung verweigert die Zertifizierungsstelle die Ausstellung aller digitalen Zertifikate für das sendende Gerät, wenn mindestens eine Signierungsanforderung negativ verifiziert wurde. Da bereits die Manipulation einer Signierungsanforderung auf Aktivitäten eines aktiven Angreifers hinweist und eventuell nicht entschieden werden kann, welche der erhaltenen Signierungsanforderungen manipuliert wurde, kann somit eine ungerechtfertigte Ausstellung eines Zertifikats für möglicherweise manipulierte Signierungsanforderungen kategorisch vermieden werden.

Die Erfindung betrifft ebenfalls ein Gerät zum manipulationssicheren Bereitstellen digitaler Zertifikate für mehrere öffentliche Schlüssel umfassend eine Speichereinheit, die derart ausgebildet ist, eine Mehrzahl von Schlüsselpaaren mit jeweils einem öffentlichen Schlüssel und einem dazugehörenden privaten Schlüssel zu speichern, eine Anfrageeinheit die derart ausgebildet ist, jeweils eine Signierungsanforderung zur Anforderung eines digitalen Zertifikats für jeden von mehreren öffentlichen Schlüssel zu erstellen, und Signierungsanforderungen für den i-ten öffentlichen Schlüssel mit dem j-ten privaten Schlüssel nach einer Signierungsregel zu signieren, wobei der j-te private Schlüssel ungleich dem zum i-ten öffentlichen Schlüssel gehörenden i-ten privaten Schlüssel ist. Des Weiteren umfasst das Gerät eine Sendeeinheit, die ausgebildet ist alle Signierungsanforderungen an eine gleiche Zertifizierungsstelle zu senden.

Die Erfindung umfasst des Weiteren eine Zertifizierungsstelle zur manipulationssicheren Bereitstellung mehrerer digitaler Zertifikate für mehrere öffentliche Schlüssel eines Geräts, die eine Empfangseinheit, eine Speichereinheit und eine Zertifizierungseinheit aufweist. Die Empfangseinheit ist derart ausgebildet, jeweils eine Signierungsanforderung zur Anforderung eines digitalen Zertifikats für jeden von mehreren öffentlichen Schlüsseln von einem Gerät zu empfangen. Die Speichereinheit ist derart ausgebildet, dass mindestens eine Signierungsregel gespeichert werden kann, wobei die Signierungsregel angibt, dass eine Signierungsanforderung für einen i-ten öffentlichen Schlüssel mit dem j-ten privaten Schlüssel signiert wird, wobei der j-te private Schlüssel ungleich dem zum i-ten öffentlichen Schlüssel gehörenden i-ten privaten Schlüssel ist. Die Zertifizierungseinheit ist derart ausgebildet, eine Signierungsanforderung daraufhin zu prüfen, ob diese gemäß der Signierungsregel signiert ist.

In einer vorteilhaften Ausführungsform umfasst die Zertifizierungsstelle außerdem eine Ausstellungseinheit, die derart ausgebildet ist, jeweils ein digitales Zertifikat für alle der mehreren öffentlichen Schlüssel auszustellen, wenn alle Signierungsanforderungen positiv verifiziert wurden.

Des Weiteren umfasst die vorliegende Erfindung ein System zur Bereitstellung mehrerer digitaler Zertifikate für mehrere öffentliche Schlüssel eines Geräts, das mindestens ein erfindungsgemäßes Gerät sowie eine erfindungsgemäße Zertifizierungsstelle aufweist.

Des Weiteren werden ein Computerprogramm mit Programmbefehlen zur Durchführung des erfindungsgemäßen Verfahrens sowie ein Datenträger, der das Computerprogramm speichert beansprucht.

Ausführungsbeispiele des erfindungsgemäßen Verfahrens bzw. des erfindungsgemäßen Geräts, der erfindungsgemäßen Zertifizierungsstelle bzw. des erfindungsgemäßen Systems sind in den Zeichnungen beispielhaft dargestellt und werden anhand der nachfolgenden Beschreibung näher erläutert. Es zeigen:
- Figur 1: ein erstes Ausführungsbeispiel mit zwei Signierungsanforderungen gemäß dem erfindungsgemäßen Verfahren in schematischer Darstellung;
- Figur 2: ein zweites Ausführungsbeispiel mit drei Signierungsanforderungen gemäß dem erfindungsgemäßen Verfahren in schematischer Darstellung, und
- Figur 3: ein Ausführungsbeispiel eines erfindungsgemäßen Systems sowie einem Ausführungsbeispiel des Nachrichtenflusses in schematischer Darstellung.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

Schlüsselpaare eines Geräts können in einer sicheren Umgebung, beispielsweise dem Gerät selbst, erzeugt werden. Um für insbesondere mehrere öffentliche Schlüssel ein von einer Zertifizierungsstelle signiertes Zertifikat zu erhalten, wird im Gerät für jeden öffentlichen Schlüssel eine Signierungsanforderung erstellt, und an die jeweils gleiche Zertifizierungsstelle gesendet.

In den bisher üblichen Verfahren wird eine Signierungsanforderung selbst signiert, d.h. mit dem zum öffentlichen Schlüssel Kpub_1 gehörenden privaten Schlüssel Kpriv_1 signiert.

Insbesondere beim Übertragen einer solchen Signierungsanforderung CSR_1 über ein unsicheres Netz, wie beispielsweise dem Internet, kann eine Signierungsanforderung eventuell unterdrückt und durch eine gefälschte Signierungsanforderung ersetzt werden, die den öffentlichen Schlüssel des Angreifers enthält. Dieser könnte dann von der Zertifizierungsstelle ein Zertifikat mit den Anwenderdaten des Gerätes erhalten, und sich dann im Netzwerk für dieses Gerät ausgeben.

Um eine solche Manipulation zu erkennen und zu vermeiden, wird nun erfindungsgemäß bei der Anforderung mehrerer Zertifikate CERT_1, .., CERT_M für mehrere öffentliche Schlüssel Kpub_1, .., Kpub_M für ein Gerät bei jeweils der gleichen Zertifizierungsstelle jeweils eine i-te Signierungsanforderung CSR_i für den öffentlichen Schlüssel Kpub_i durch einen privaten Schlüssel Kpriv_j, der zu einem öffentlichen Schlüssel Kpub_j, der ungleich Kpub_i ist, gehört, signiert.

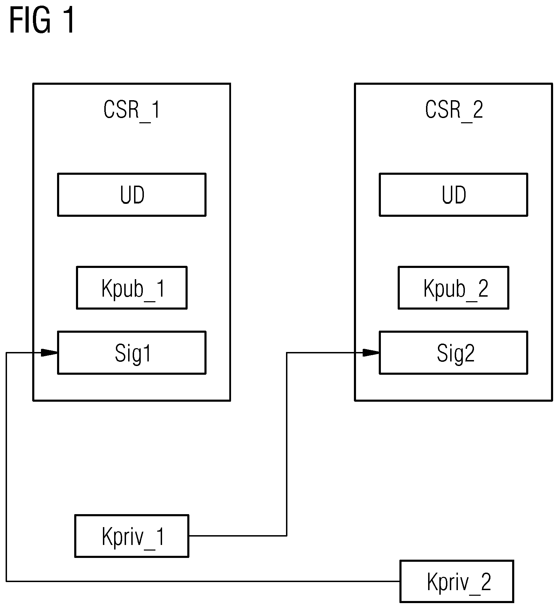

Zwei entsprechende Signierungsanforderungen CSR_1, CSR_2 sind in Figur 1 dargestellt. Beide Signierungsanforderungen werden in einem Gerät erstellt und an eine Zertifizierungsstelle, die für beide Zertifikate jeweils die gleiche Zertifizierungsstelle ist, gesendet. Beide Signierungsanforderungen CSR_1, CSR_2 enthalten jeweils Anwenderdaten UD, die beispielsweise eine Kennung des Geräts und weitere Angaben wie beispielsweise die Organisation bzw. den Hersteller des Geräts oder auch weitere, das Gerät kennzeichnende Angaben, umfassen. Die Signierungsanforderung CSR_1 umfasst den öffentlichen Schlüssel Kpub_1, für den ein Zertifikat CERT_1 angefordert wird, und ist mit dem privaten Schlüssel Kpriv_2, der zum öffentlichen Schlüssel Kpub_2 gehört, signiert. Die Signierungsanforderung CSR_2 umfasst den öffentlichen Schlüssel Kpub_2, für den ein Zertifikat CERT_2 angefordert wird, und ist mit dem privaten Schlüssel Kpriv_1, der zum öffentlichen Schlüssel Kpub_1 gehört, signiert.

Werden mehrere, aber nicht alle der Signierungsanforderungen CSR_1, ..., CSR_M abgefangen und von einem Angreifer durch dessen manipulierte Signierungsanforderungen ersetzt, so kann dies von der Zertifizierungsstelle leicht erkannt und ein Alarm ausgelöst werden.

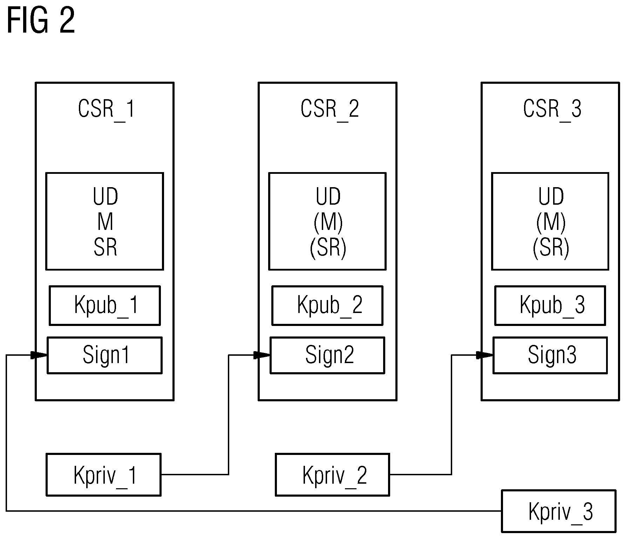

In Figur 2 ist eine zyklisch vertauschte Signierung für drei Signierungsanforderungen CSR_1, CSR_2, CSR_3 dargestellt. Dabei wird beispielsweise die zweite Signierungsanforderung CSR_2 für den öffentlichen Schlüssel Kpub_2 mit dem privaten Schlüssel Kpriv_1, der zum öffentlichen Schlüssel Kpub_1 gehört, signiert. Die dritte Signierungsanforderung CSR_3 für den öffentlichen Schlüssel Kpub_3 wird mit dem privaten Schlüssel Kpriv_2, der zum öffentlichen Schlüssel Kpub_2 gehört, signiert. Schließlich wird die erste Signierungsanforderung CSR_1 für den öffentlichen Schlüssel Kpub_1 mit dem privaten Schlüssel Kpriv_3 signiert, der zum öffentlichen Schlüssel Kpub_3 gehört.

Wie oben bereits dargestellt, soll jeweils die Signierungsanforderung CSR_j des öffentlichen Schlüssels Kpub_j mit einem privaten Schlüssel Kpriv_i signiert werden, der zu einem anderen öffentlichen Schlüssel Kpub_i gehört, alsoi ungleich j, um die Signierungsanforderungen miteinander zu koppeln. Bei zwei Signierungsanforderungen ist nur eine Vertauschung, alsoKpriv_1 signiert CSR_2 und Kpriv_2 signiert CSR_1, möglich, und damit auch nur eine Signierungsregel. Bei drei Signierungsanforderungen gibt es zwei mögliche Vertauschungsregeln, bei denen jeder private Schlüssel Kpriv_i die Signierungsanforderung CSR_j genau eines anderen öffentlichen Schlüssels Kpub_j signiert, nämlich eine zyklische Vertauschung, also Kpriv_1 signiert CSR_2, Kpriv_2 signiert CSR_3 und Kpriv_3 signiert CSR_1, sowie eine antizyklische Vertauschung, Kpriv_1 signiert CSR_3, Kpriv_3 signiert CSR_2 und Kpriv_2 signiert CSR_1. Zusätzlich ist es auch möglich, mit einem privaten Schlüssel Kpriv_i mehrere Signierungsanforderungen CSR_j anderer öffentlicher Schlüssel Kpub_j zu signieren, beispielsweise Kpriv_1 signiert die Signierungsanforderung CSR_2 und die Signierungsanforderung CSR_3, Kpriv_2 signiert die Signierungsanforderung CSR_1, und Kpriv_3 signiert keine Signierungsanforderung, da alle Signierungsanforderungen bereits mit anderen privaten Schlüsseln als Kpriv_3 signiert wurden. Auch in diesem Fall sind alle Signierungsanforderungen miteinander gekoppelt.

Bei vier und mehr Signierungsanforderungen sind auch Vertauschungen mit disjunkten Teilgruppen möglich, z.B. Kpriv_1 signiert die Signierungsanforderung CSR_2, Kpriv_2 signiert die Signierungsanforderung CSR_1, Kpriv_3 signiert die Signierungsanforderung CSR_4 und Kpriv_4 signiert die Signierungsanforderung CSR_3. Die Verwendung solcher Vertauschungen mit disjunkten Teilgruppen hat allerdings den Nachteil, dass die Signierungsanforderungen unterschiedlicher Teilgruppen nicht mehr miteinander gekoppelt sind und die Zertifizierungsstelle eine Manipulation dann nicht mehr feststellen kann, wenn es einem Angreifer gelingt, alle Signierungsanforderungen einer disjunkten Teilgruppe durch eigene zu ersetzen. Daher ist es vorteilhaft, insbesondere Signierungsregeln mit solchen Vertauschungen zu verwenden, die keine disjunkten Teilgruppen bilden.

Unabhängig von dem obigen Ausführungsbeispiel können in den Signierungsanforderungen CSR_i neben den Anwenderdaten UD Angaben zur Anzahl M der Signierungsanforderungen, die von einem Gerät unter Vertauschung der Signatur an die Zertifizierungsstelle gesandt werden, enthalten. Zusätzlich kann eine Signierungsregel SR in einer Signierungsanforderungsnachricht enthalten sein und so an die Zertifizierungsstelle übertragen und ihr damit bekannt gemacht werden. Die Anzahl der so gekoppelten Signierungsanforderungen M und die Signierungsregel SR ist dabei in mindestens einer Signierungsanforderungsnachricht enthalten. Sie kann jedoch auch in jeder Signierungsanforderungsnachricht enthalten sein.

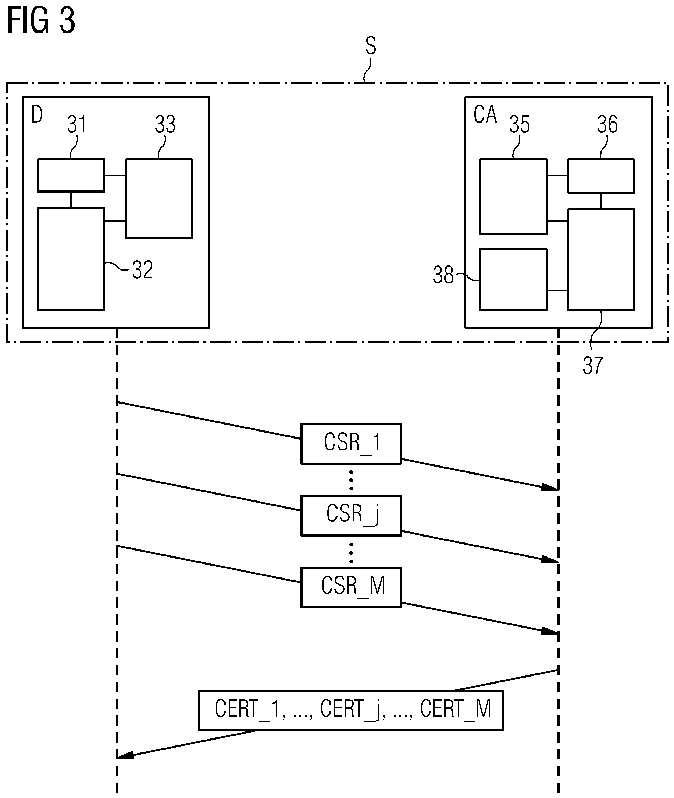

In Figur 3 ist nun ein beispielhafter Nachrichtenfluss zwischen einem Gerät D und einer Zertifizierungsstelle CA dargestellt. In diesem Beispiel werden eine Anzahl M von Signierungsanforderungen CSR_1, ..., CSR_M von einem Gerät D für M Schlüsselpaare zur Anforderung eines Zertifikats für den jeweiligen öffentlichen Schlüssel Kpub_1 bis Kpub_M erstellt. Dabei wird jede Signierungsanforderung CSR_i für den i-ten öffentlichen Schlüssel Kpub_i mit dem j-ten privaten Schlüssel Kpriv_j gemäß einer Signierungsregel SR signiert, wobei der j-te private Schlüssel Kpriv_j ungleich dem zum i-ten öffentlichen Schlüssel Kpub_i gehörenden privaten Schlüssel Kpriv_i ist, siehe Beispiele aus Figur 1 und Figur 2. Anschließend werden die Signierungsanforderungen CSR_1, ..., CSR_M nach Erstellung in beliebiger Reihenfolge in einzelnen Nachrichten an die Zertifizierungsstelle CA gesendet, wobei beispielsweise zufällige Wartezeiten zwischen den Nachrichten eingehalten werden. Vorteilhaft ist es, wenn die Signierungsanforderungen CSR_1, ..., CSR_M jeweils auf unterschiedlichen Kommunikationswegen zur Zertifizierungsstelle CA versandt werden, insbesondere wenn, beispielsweise aus Redundanzgründen, mehrere Kommunikationswege, beispielsweise über ein Mobilfunknetz oder ein festes Datennetz, zur Verfügung stehen.

Sind alle Signierungsanforderungen CSR_1, ..., CSR_M bei der Zertifizierungsstelle CA angekommen, so prüft diese die Signierungsanforderungen CSR_1, ..., CSR_M nicht, ob sie selbst signiert, sondern ob sie erfindungsgemäß in der erwarteten Weise gemäß der Signierungsregel SR vertauscht signiert sind.

Die Anzahl M der zu erwartenden Signierungsanforderungen CSR_1, ..., CSR_M eines neuen Geräts D ist der Zertifizierungsstelle CA entweder durch Voreinstellung oder durch eine Mitteilung beispielsweise einer Signierungsmanagementstelle bekannt. Gleiches gilt für die beim Gerät D angewandten Signierungsregeln SR. Diese sind ebenfalls der Zertifizierungsstelle CA bekannt. Alternativ kann, wie in Figur 2 gezeigt, die Anzahl M und die Signierungsregel SR der gekoppelten Signierungsanforderungen CSR_1, ..., CSR_M in mindestens einer Signierungsanforderung enthalten sein und von der Zertifizierungsstelle ausgelesen und angewandt werden. Dabei ist wichtig, dass die Information zur Anzahl M sowie zur Signierungsregel SR mit einer Kennung des sendenden Geräts G, die beispielsweise in den Anwenderdaten UD enthalten ist, assoziiert ist.

Sind alle Prüfungen in der Zertifizierungsstelle CA erfolgreich, werden also alle Signierungsanforderungen CSR_1, ..., CSR_M positiv verifiziert, so stellt die Zertifizierungsstelle CA jeweils ein digitales Zertifikat CERT_1, CERT_M für alle der mehreren öffentlichen Schlüssel Kpub_1, ..., Kpub_M aus. Die Zertifikate CERT_1, ..., CERT_M können entweder zusammen oder getrennt an den Ersteller der Signierungsanforderungen CSR_1, ..., CSR_M übertragen werden. Anstelle der Rücksendung an das Gerät oder zusätzlich dazu können die Zertifikate auch in einem öffentlich zugänglichen Speicherbereich bereitgehalten und dem Gerät oder Dritten auf Anfrage zur Verfügung gestellt werden. In Figur 3 ist der Übersicht halber lediglich die gemeinsame Übertragung der Zertifikate in einer Nachricht dargestellt.

Passt mindestens eine Signatur einer Signierungsanforderung CSR_j nicht mit der Signierungsregel SR zusammen und wird somit negativ verifiziert, so verweigert die Zertifizierungsstelle CA mindestens eine Ausstellung des zugehörigen digitalen Zertifikats CERT_j. Es ist jedoch vorteilhaft, dass die Zertifizierungsstelle CA die Ausstellung aller digitalen Zertifikate CERT_1, ..., CERT_M, verweigert, wenn mindestens eine Signierungsanforderung CSR_j negativ verifiziert wurde.

Bei einer negativen Verifizierung kann die Zertifizierungsstelle CA einen Alarm auslösen und damit das sendende Gerät D, aber auch weitere Geräte, die bei der Zertifizierungsstelle Zertifikate beantragen möchten und beispielsweise über das gleiche Datennetz mit der Zertifizierungsstelle verbunden sind, oder einen menschlichen Bediener in Alarmbereitschaft versetzen. Die Anforderung und/oder Erstellung von Zertifikaten kann während der Dauer des Alarms unterbunden oder bis zu einem aktiven Abschalten des Alarms verzögert werden.

Im oberen Teil der Figur 3 ist ein erfindungsgemäßes System S beispielhaft dargestellt. Es umfasst eine Zertifizierungsstelle CA sowie ein Gerät D, die durch ein oder mehrere Datenübertragungsnetze, nicht dargestellt, miteinander verbunden sind.

Das Gerät D umfasst eine Speichereinheit 31, eine Anfrageeinheit 32 sowie eine Sendeeinheit 33, die jeweils miteinander verbunden sind. Die Sendeeinheit 33 umfasst zusätzlich eine Schnittstelle, nicht dargestellt, zur Übertragung von Signierungsanforderungen CSR_1, ..., CSR_M an die Zertifizierungsstelle CA. Die Speichereinheit 31 ist dabei derart ausgebildet, dass eine Mehrzahl von Schlüsselpaaren K_1, ..., K_N mit jeweils einem öffentlichen Schlüssel Kpub_1, ..., Kpub_N und einem dazugehörenden privaten Schlüssel Kpriv_1, ..., Kpriv_N zu speichern. Das Gerät D kann entweder für alle öffentlichen Schlüssel Kpub_1, ..., Kpub_N oder aber für eine Teilmenge M, wobei M jedoch größer als 1 sein muss, bei der jeweils gleichen Zertifizierungsstelle CA Zertifikate CERT_1, ..., CERT_M anfordern.

In der Anfrageeinheit 32 wird jeweils eine Signierungsanforderung CSR_1, ..., CSR_M zur Anforderung eines digitalen Zertifikats für jeden von mehreren öffentlichen Schlüsseln Kpub_1, ..., Kpub_M erstellt, wobei eine Signierungsanforderung CSR_i gemäß der Signierungsregel SR signiert wird. Diese Signierungsanforderungen CSR_1, ..., CSR_M werden an die Sendeeinheit 33 weitergegeben. Diese ist dabei so ausgebildet, dass alle Signierungsanforderungen CSR_1, ..., CSR_M mit einer beispielsweise zufälligen Wartezeit beabstandet an die jeweils gleiche Zertifizierungsstelle gesendet werden. Dabei können jedoch unterschiedliche Schnittstellen zu unterschiedlichen Übertragungsnetzen für die Übertragung der verschiedenen Signierungsanforderungen CSR_1, ..., CSR_M verwendet werden.

Die Zertifizierungsstelle CA umfasst eine Empfangseinheit 35, die mit einer Speichereinheit 36 sowie mit einer Zertifizierungseinheit 37 verbunden ist. Die Zertifizierungseinheit 37 ist mit der Speichereinheit 36 sowie der Ausstellungseinheit 38 verbunden. Die Empfangseinheit 35 ist dabei so ausgebildet, dass sie Signierungsanforderungen CSR_1, ..., CSR_M von einem Gerät D empfangen kann.

In der Speichereinheit 36 ist mindestens eine Signierungsregel SR für Signierungsanforderungen CSR_1, ..., CSR_M von einem vorbestimmten Gerät D gespeichert, sowie eine Anzahl M der von einem Gerät D zur Anforderung von Zertifikaten CERT_1, ..., CERT_M für die öffentlichen Schlüssel Kpub_1, ..., Kpub_M bereits erhaltenen, gekoppelten Signierungsanforderungen CSR_1, ..., CSR_M gespeichert. Zusätzlich kann die Anzahl M von zu koppelnden Signierungsanforderungen dort gespeichert sein.

Die Zertifizierungseinheit 37 umfasst Mittel, beispielsweise einen Prozessor, um die Signierungsanforderungen CSR_1, ..., CSR_M daraufhin zu prüfen, ob sie gemäß der Signierungsregel SR signiert sind. Die Zertifizierungseinheit 37 umfasst des Weiteren Mittel, um einen Alarm zu aktivieren, beispielsweise eine Mitteilung, die an das sendende Gerät D oder auch weitere Geräte oder eine zentrale Meldestelle gesandt wird, zu generieren und weiterzuleiten.

Die Ausstellungseinheit 38 ist ausgebildet, um jeweils ein digitales Zertifikat CERT_1, ..., CERT_M für alle öffentlichen Schlüssel Kpub_1, ..., Kpub_M auszustellen, wenn alle Signierungsanforderungen CSR_1, ..., CSR_M positiv verifiziert wurden und ihr dies von der Zertifizierungseinheit 37 mitgeteilt wurde. Die Ausstellungseinheit 38 umfasst ebenfalls eine oder auch mehrere Schnittstellen zu einem Datenübertragungsnetz, über die sie die ausgestellten Zertifikate CERT_1, ..., CERT_M entweder gemeinsam oder getrennt an das Gerät zurücksendet oder in einer öffentlich zugänglichen Ablage, beispielsweise einem Server, deponiert.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zum manipulationssicheren Bereitstellen mehrerer digitaler Zertifikate für mehrere öffentliche Schlüssel (Kpub_1, ..., Kpub_M) eines Geräts (D) durch eine Zertifizierungsstelle (CA), wobei das Gerät über mehrere Anwendungen und mehrere Schlüsselpaare mit jeweils einem öffentlichen (Kpub_1, ..., Kpub_M) und einem dazugehörenden privaten Schlüssel verfügt, wobei für die mehreren Anwendungen unterschiedliche Schlüsselpaare verwendet werden, mit den Verfahrensschritten:
- Erstellen jeweils einer Signierungsanforderung (CSR_1, ..., CSR_M) für jeden von mehreren öffentlichen Schlüssel (Kpub_1, ..., Kpub_M) zur Anforderung eines digitalen Zertifikats (CERT_1, ..., CERT_M),
- jeweils Signieren der Signierungsanforderung (CSR_i) für den i-ten öffentlichen Schlüssel (Kpub_i) mit dem j-ten privaten Schlüssel (Kpriv_j) für alle M öffentlichen Schlüssel (Kpub_1, ..., Kpub_M) nach einer Signierungsregel (SR), wobei jeweils der j-te private Schlüssel (Kpriv_j) ungleich dem zum i-ten öffentlichen Schlüssel (Kpub_i) gehörenden i-ten privaten Schlüssel (Kpriv_i) ist,
- Senden aller Signierungsanforderungen (CSR_1, ..., CSR_M) an eine jeweils gleiche Zertifizierungsstelle (CA), und
- Verifizieren jeder Signierungsanforderung (CSR_1, ..., CSR_M) in der Zertifizierungsstelle (CA), wobei geprüft wird, ob jede Signierungsanforderung entsprechend der Signierungsregel (SR) signiert ist, wobei M die Anzahl der Schlüsselpaare bzw. Signierungsanforderungen und i, j jeweils ein Element der Menge {1,.., M} ist.

2. Verfahren nach Anspruch 1 mit einem zusätzlichen Verfahrensschritt:
- Ausstellen jeweils eines digitalen Zertifikates (CERT_1, ..., CERT_M) für alle der mehreren öffentlichen Schlüssel (Kpub_1, ..., Kpub_M), wenn alle Signierungsanforderungen (CSR_1, ..., CSR_M) positiv verifiziert wurden.

3. Verfahren nach Anspruch 1 oder 2, wobei als Signierungsregel (SR) jeweils die i-te Signierungsanforderung (CSR_i) zyklisch oder antizyklisch oder in anderer Weise vertauscht mit dem j-ten privaten Schlüssel (Kpriv_j) signiert wird.

4. Verfahren nach einem der Ansprüche 1 bis 3, wobei die Signierungsanforderungen (CSR_1, ..., CSR_M) jeweils mit einer zufälligen Wartezeit zueinander beabstandet an die Zertifizierungsstelle (CA) versandt werden.

5. Verfahren nach einem der Ansprüche 1 bis 4, wobei die Signierungsanforderungen (CSR_1, ..., CSR_M) jeweils auf unterschiedlichen Kommunikationswegen zur Zertifizie-rungsstelle (CA) versandt werden.

6. Verfahren nach einem der Ansprüche 1 bis 5, wobei die Zertifizierungsstelle (CA) die angeforderten Zertifikate (CERT_1, ..., CERT_M) in einer gemeinsamen Nachricht an das Gerät (D) sendet.

7. Verfahren nach einem der Ansprüche 1 bis 5, wobei die Zertifizierungsstelle (CA) die angeforderten Zertifikate (CERT_1, ..., CERT_M) getrennt in mehreren Nachrichten an das Gerät (D) sendet.

8. Verfahren nach einem der Ansprüche 1 bis 7, wobei die Anzahl der Signierungsanforderungen (CSR_1, ..., CSR_M), die von einem einzigen Gerät (D) gesendeten werden, der Zertifizierungsstelle (CA) bekannt ist und/oder der Zertifizierungsstelle (CA) mitgeteilt wird.

9. Verfahren nach einem der Ansprüche 1 bis 8, wobei die angewandte Signierungsregel (SR) der Zertifizierungsstelle (CA) bekannt ist und/oder der Zertifizierungsstelle (CA) mitgeteilt wird.

10. Verfahren nach Anspruch 8 oder 9, wobei die Anzahl (M) der Signierungsanforderungen (CSR_1, ..., CSR_M) und/oder die Signierungsregel (SR) in mindestens einer der Signierungsanforderungen (CSR_1, ..., CSR_M) vom Gerät (D) an die Zertifizierungsstelle (CA) übertragen wird.

11. Verfahren nach einem der Ansprüche 1 bis 10, wobei die Zertifizierungsstelle (CA) einen Alarm auslöst, wenn mindestens eine Signierungsanforderung (CSR_1, ..., CSR_M) nicht positiv verifiziert wurde.

12. Verfahren nach einem der Ansprüche 1 bis 11, wobei bei einer negativ verifizierten Signierungsanforderung (CSR_j) eine Ausstellung mindestens des zugehörigen digitalen Zertifikates (CERT_j) durch die Zertifizierungsstelle (CA) verweigert wird.

13. Verfahren nach einem der Ansprüche 1 bis 11, wobei die Zertifizierungsstelle (CA) die Ausstellung aller digitalen Zertifikate (CERT_1, ..., CERT_M) verweigert, wenn mindestens eine Signierungsanforderung (CSR_j) negativ verifiziert wurde.

14. Gerät zum manipulationssicheren Bereitstellen mehrerer digitaler Zertifikate für mehrere öffentliche Schlüssel (Kpub_1, ..., Kpub_M), wobei das Gerät über mehrere Anwendungen und mehrere Schlüsselpaare mit jeweils einem öffentlichen (Kpub_1, ..., Kpub_M) und einem dazugehörenden privaten Schlüssel (Kpriv_1, ..., Kpriv_M) verfügt, wobei für die mehreren Anwendungen unterschiedliche Schlüsselpaare verwendet werden, umfassend:
- eine Speichereinheit (31), die derart ausgebildet ist, eine Mehrzahl von Schlüsselpaaren mit jeweils einem öffentlichen Schlüssel (Kpub_1, ..., Kpub_M) und einen dazugehörenden privaten Schlüssel (Kpriv_1, ..., Kpriv_M) zu speichern,
- eine Anfrageeinheit (32), die derart ausgebildet ist, jeweils eine Signierungsanforderung (CSR_1, ..., CSR_M) für jeden von mehreren öffentlichen Schlüsseln (Kpub_1, ..., Kpub_M) zur Anforderung eines digitalen Zertifikats (CERT_1, ..., CERT_M) zu erstellen und jeweils eine Signierungsanforderung (CSR_i) für den i-ten öffentlichen Schlüssel (Kpub_i) mit dem j-ten privaten Schlüssel (Kpriv_j) für alle M öffentlichen Schlüssel (Kpub_1, ..., Kpub_M) nach einer Signierungsregel (SR) zu signieren, wobei jeweils der j-te private Schlüssel (Kpriv_j) ungleich dem zum i-ten öffentlichen Schlüssel (Kpub_i) gehörenden i-ten privaten Schlüssel (Kpriv_i) ist, und
- eine Sendeeinheit(33), die derart ausgebildet ist, alle Signierungsanforderungen (CSR_1, ..., CSR_M) an eine jeweils gleiche Zertifizierungsstelle (CA) zu senden, wobei M die Anzahl der Schlüsselpaare bzw. Signierungsanforderungen und i, j jeweils ein Element der Menge {1,.., M} ist.

15. Gerät nach Anspruch 14, wobei die Speichereinheit (31), die Anfrageeinheit (32) und die Sendeeinheit (33) derart ausgebildet sind die Verfahrensschritte gemäß den Ansprüchen 3, 4, 5, 8, 9, 10 auszuführen.

16. Zertifizierungsstelle zur manipulationssicheren Bereitstellung mehrerer digitaler Zertifikate für mehrere öffentliche Schlüssel (Kpub_1, ..., Kpub_M) eines Geräts (D), ), wobei das Gerät über mehrere Anwendungen und mehrere Schlüsselpaare mit jeweils einem öffentlichen (Kpub_1, ..., Kpub_M) und einem dazugehörenden privaten Schlüssel (Kpriv_1, ..., Kpriv_M) verfügt, wobei für die mehreren Anwendungen unterschiedliche Schlüsselpaare verwendet werden, umfassend:
- eine Empfangseinheit (35), die derart ausgebildet ist, jeweils eine Signierungsanforderung (CSR_1, ..., CSR_M) für jede von mehreren öffentlichen Schlüssel (Kpub_1, ..., Kpub_M) zur Anforderung eines digitalen Zertifikats (CERT_1, ..., CERT_M) von einem Gerät (D) zu empfangen,
- eine Speichereinheit (36), die derart ausgebildet ist, mindestens eine Signierungsregel (SR) zu speichern, wobei die Signierungsregel (SR) angibt, dass jeweils eine Signierungsanforderung (CSR_i) für einen i-ten öffentlichen Schlüssel (Kpub_i) mit dem j-ten privaten Schlüssel (Kpriv_j) für alle M öffentlichen Schlüssel (Kpub_1,...,Kpub_M) signiert wird, wobei jeweils der j-te private Schlüssel (Kpriv_j) ungleich dem zum i-ten öffentlichen Schlüssel (Kpub_i) gehörende i-te private Schlüssel (Kpriv_i) ist,
- eine Zertifizierungseinheit (37), die derart ausgebildet ist, eine Signierungsanforderungsnachricht (CSR_i) daraufhin zu prüfen, ob diese gemäß der Signierungsregel (SR) signiert ist, wobei M die Anzahl der Schlüsselpaare bzw. Signierungsanforderungen und i, j jeweils ein Element der Menge {1,.., M} ist.

17. Zertifizierungsstelle nach Anspruch 16, wobei
- eine Ausstellungseinheit (38) derart ausgebildet ist, jeweils ein digitales Zertifikat (CERT_1, ..., CERT_M) für alle der mehreren öffentlichen Schlüssel (Kpub_1, ..., Kpub_M) auszustellen, wenn alle Signierungsanforderungsnachricht (CSR_1, ..., CSR_M) positiv verifiziert wurden.

18. Zertifizierungsstelle nach Anspruch 16 oder 17, wobei die Empfangseinheit (35), die Speichereinheit (36), die Zertifizierungseinheit (37) und die Ausstellungseinheit (38) derart ausgebildet sind die Verfahrensschritte gemäß Anspruch 2, 6 bis 13 auszuführen.

19. System zur Bereitstellung mehrerer digitaler Zertifikate für mehrere öffentliche Schlüssel (Kpub_1, ..., Kpub_M) eines Geräts (D), umfassend mindestens ein Gerät (D) ausgebildet gemäß den Ansprüchen 14 und 15 und eine Zertifizierungsstelle (CA) ausgebildet gemäß den Ansprüchen 16 bis 18.

20. Computerprogramm mit Programmbefehlen zur Durchführung des Verfahrens nach Ansprüchen 1-13.

21. Datenträger, der das Computerprogramm nach Anspruch 20 speichert.

## Claims

1. A method for a tamperproof provision of a plurality of digital certificates for a plurality of public keys (Kpub_1, ..., Kpub_M) of a device (D) by a certification authority (CA), the device having a plurality of applications and a plurality of key pairs each with a public key (Kpub_1, ..., Kpub_M) and an associated private key, different key pairs being used for the plurality of applications, having the method steps of:
- creating a respective signing request (CSR_1, ..., CSR_M) for requesting a digital certificate (CERT_1, ..., CERT_M) for each of a plurality of public keys (Kpub_1, ..., Kpub_M),
- respectively signing the signing request (CSR_i) for the ith public key (Kpub_i) using the jth private key (Kpriv_j) for all M public keys (Kpub_1, ..., Kpub_M) in accordance with a signing rule (SR), the respective jth private key (Kpriv_j) being dissimilar to the ith private key (Kpriv_i) belonging to the ith public key (Kpub_i),
- transmitting all signing requests (CSR_1, ..., CSR_M) to the same certification authority (CA) in each case, and
- verifying each signing request (CSR_1, ..., CSR_M) in the certification authority (CA), in which case a check is performed to determine whether each signing request has been signed in accordance with the signing rule (SR), where M is the number of key pairs or signing requests and i, j are each an element in the set {1,..., M}.

2. The method as claimed in claim 1, having an additional method step of:
- issuing a respective digital certificate (CERT_1, ..., CERT_M) for all of the plurality of public keys (Kpub_1, ..., Kpub_M) if all signing requests (CSR_1, ..., CSR_M) have been positively verified.

3. The method as claimed in claim 1 or 2, the ith signing request (CSR_i) respectively being signed cyclically or anticyclically or interchanged in another manner using the jth private key (Kpriv_j) as the signing rule (SR).

4. The method as claimed in one of claims 1 to 3, the signing requests (CSR_1, ..., CSR_M) each being sent to the certification authority (CA) in a manner spaced apart from one another by a random waiting time.

5. The method as claimed in one of claims 1 to 4, the signing requests (CSR_1, ..., CSR_M) each being sent to the certification authority (CA) on different communication paths.

6. The method as claimed in one of claims 1 to 5, the certification authority (CA) transmitting the requested certificates (CERT_1, ..., CERT_M) to the device (D) in a common message.

7. The method as claimed in one of claims 1 to 5, the certification authority (CA) transmitting the requested certificates (CERT_1, ..., CERT_M) to the device (D) separately in a plurality of messages.

8. The method as claimed in one of claims 1 to 7, the number of signing requests (CSR_1, ..., CSR_M) transmitted by a single device (D) being known to the certification authority (CA) and/or being communicated to the certification authority (CA).

9. The method as claimed in one of claims 1 to 8, the signing rule (SR) used being known to the certification authority (CA) and/or being communicated to the certification authority (CA).

10. The method as claimed in claim 8 or 9, the number (M) of signing requests (CSR_1, ..., CSR_M) and/or the signing rule (SR) being transmitted to the certification authority (CA) in at least one of the signing requests (CSR_1, ..., CSR_M) from the device (D).

11. The method as claimed in one of claims 1 to 10, the certification authority (CA) triggering an alarm if at least one signing request (CSR_1, ..., CSR_M) has not been positively verified.

12. The method as claimed in one of claims 1 to 11, issue of at least the associated digital certificate (CERT_j) being refused by the certification authority (CA) in the event of a negatively verified signing request (CSR_j).

13. The method as claimed in one of claims 1 to 11, the certification authority (CA) refusing the issue of all digital certificates (CERT_1, ..., CERT_M) if at least one signing request (CSR_j) has been negatively verified.

14. A device for a tamperproof provision of a plurality of digital certificates for a plurality of public keys (Kpub_1, ..., Kpub_M), the device having a plurality of applications and a plurality of key pairs each with a public key (Kpub_1, ..., Kpub_M) and an associated private key (Kpriv_1, ..., Kpriv_M), different key pairs being used for the plurality of applications, comprising:
- a storage unit (31) which is designed to store a plurality of key pairs each with a public key (Kpub_1, ..., Kpub_M) and an associated private key (Kpriv_1, ..., Kpriv_M),
- a requesting unit (32) which is designed to respectively create a signing request (CSR_1, ..., CSR_M) for requesting a digital certificate (CERT _1, ..., CERT_M) for each of a plurality of public keys (Kpub_1, ..., Kpub_M) and to respectively sign a signing request (CSR_i) for the ith public key (Kpub_i) using the jth private key (Kpriv_j) for all M public keys (Kpub_1, ..., Kpub_M) in accordance with a signing rule (SR), the respective jth private key (Kpriv_j) being dissimilar to the ith private key (Kpriv_i) belonging to the ith public key (Kpub_i), and
- a transmitting unit (33) which is designed to transmit all signing requests (CSR_1, ..., CSR_M) to the same certification authority (CA) in each case, where M is the number of key pairs or signing requests and i, j are each an element in the set {1,..., M}.

15. The device as claimed in claim 14, the storage unit (31), the requesting unit (32) and the transmitting unit (33) being designed to carry out the method steps as claimed in claims 3, 4, 5, 8, 9 and 10.

16. A certification authority for a tamperproof provision of a plurality of digital certificates for a plurality of public keys (Kpub_1, ..., Kpub_M) of a device (D), the device having a plurality of applications and a plurality of key pairs each with a public key (Kpub_1, ..., Kpub_M) and an associated private key (Kpriv_1, ..., Kpriv_M), different key pairs being used for the plurality of applications, comprising:
- a receiving unit (35) which is designed to respectively receive a signing request (CSR_1, ..., CSR_M) for requesting a digital certificate (CERT _1, ..., CERT_M) for each of a plurality of public keys (Kpub_1, ..., Kpub_M) from a device (D),
- a storage unit (36) which is designed to store at least one signing rule (SR), the signing rule (SR) indicating that a respective signing request (CSR_i) for an ith public key (Kpub_i) is signed using the jth private key (Kpriv_j) for all M public keys (Kpub_1, ..., Kpub_M), the respective jth private key (Kpriv_j) being dissimilar to the ith private key (Kpriv_i) belonging to the ith public key (Kpub_i),
- a certification unit (37) which is designed to check a signing request message (CSR i) in order to determine whether it has been signed in accordance with the signing rule (SR), where M is the number of key pairs or signing requests and i, j are each an element in the set {1,..., M}.

17. The certification authority as claimed in claim 16,
- an issuing unit (38) being designed to respectively issue a digital certificate (CERT_1, ..., CERT_M) for all of the plurality of public keys (Kpub_1, ..., Kpub_M) if all signing request messages (CSR_1, ..., CSR_M) have been positively verified.

18. The certification authority as claimed in claim 16 or 17, the receiving unit (35), the storage unit (36), the certification unit (37) and the issuing unit (38) being designed to carry out the method steps as claimed in claims 2 and 6 to 13.

19. A system for providing a plurality of digital certificates for a plurality of public keys (Kpub_1, ..., Kpub_M) of a device (D), comprising at least one device (D) designed as claimed in claims 14 and 15 and a certification authority (CA) designed as claimed in claims 16 to 18.

20. A computer program having program instructions for carrying out the method as claimed in claims 1-13.

21. A data storage medium which stores the computer program as claimed in claim 20.

## Revendications

1. Procédé de mise à disposition inviolable de plusieurs certificats numériques pour plusieurs clés publiques (Kpub_1, ..., Kpub_M) d'un appareil (D) par un centre de certification (CA), l'appareil disposant de plusieurs applications et de plusieurs paires de clés avec respectivement une clé publique (Kpub_1, ..., Kpub_M) et une clé privée associée, différentes paires de clés étant utilisées pour les plusieurs applications, comportant les étapes suivantes :
- création de respectivement une requête de signature (CSR_1, ..., CSR_M) pour chacune de plusieurs clés publiques (Kpub_1, ..., Kpub_M) pour demander un certificat numérique (CERT_1, ..., CERT_M) ;
- signature respective de la requête de signature (CSR_i) pour la i^{ème} clé publique (Kpub_i) avec la j^{ème} clé privée (Kpriv_j) pour toutes les M clés publiques (Kpub_1, ..., Kpub_M) selon une règle de signature (SR), respectivement la j^{ème} clé privée (Kpriv_j) étant différente de la i^{ème} clé privée (Kpriv_i) associée à la i^{ème} clé publique (Kpub_i) ;
- envoi de toutes les requêtes de signature (CSR_1, ..., CSR_M) à un centre de certification (CA) respectivement identique ; et
- vérification de chaque requête de signature (CSR_1, ..., CSR_M) dans le centre de certification (CA), étant entendu qu'il est vérifié si chaque requête de signature est signée conformément à la règle de signature (SR), M étant le nombre de paires de clés resp. de requêtes de signature et i, j étant respectivement un élément de l'ensemble {1, .. , M} .

2. Procédé selon la revendication 1, comportant une étape supplémentaire :
- délivrance respectivement d'un certificat numérique (CERT_1, ..., CERT_M) pour toutes les plusieurs clés publiques (Kpub_1, ..., Kpub_M) lorsque toutes les requêtes de signature (CSR_1,...,CSR_M) ont été vérifiées positivement.

3. Procédé selon la revendication 1 ou 2, respectivement la i^{ème} requête de signature (CSR_i) étant signée en tant que règle de signature (SR) cycliquement ou anticycliquement ou de manière permutée différemment avec la j^{ème} clé privée (Kpriv_j) .

4. Procédé selon l'une des revendications 1 à 3, les requêtes de signature (CSR_1, ..., CSR_M) étant envoyées respectivement au centre de certification (CA) de manière espacée l'une de l'autre d'un délai aléatoire.

5. Procédé selon l'une des revendications 1 à 4, les requêtes de signature (CSR_1, ..., CSR_M) étant envoyées respectivement sur différents chemins de communication au centre de certification (CA).

6. Procédé selon l'une des revendications 1 à 5, le centre de certification (CA) envoyant les certificats demandés (CERT_1, ..., CERT_M) à l'appareil (D) dans un message commun.

7. Procédé selon l'une des revendications 1 à 5, le centre de certification (CA) envoyant les certificats (CERT_1, ..., CERT_M) demandés à l'appareil (D) séparément dans plusieurs messages.

8. Procédé selon l'une des revendications 1 à 7, le nombre de requêtes de signature (CSR_1, ..., CSR_M) envoyées par un seul appareil (D) étant connu du centre de certification (CA) et/ou communiqué au centre de certification (CA).

9. Procédé selon l'une des revendications 1 à 8, la règle de signature appliquée (SR) étant connue du centre de certification (CA) et/ou communiquée au centre de certification (CA).

10. Procédé selon la revendication 8 ou 9, le nombre (M) de requêtes de signature (CSR_1, ..., CSR_M) et/ou la règle de signature (SR) étant transmis dans au moins l'une des requêtes de signature (CSR_1, ..., CSR_M) de l'appareil (D) au centre de certification (CA).

11. Procédé selon l'une des revendications 1 à 10, le centre de certification (CA) déclenchant une alarme lorsqu'au moins une requête de signature (CSR_1, ..., CSR_M) n'a pas été vérifiée positivement.

12. Procédé selon l'une des revendications 1 à 11, une délivrance au moins du certificat numérique associé (CERT_j) étant refusée par le centre de certification (CA) en cas de requête de signature (CSR_j) vérifiée négativement.

13. Procédé selon l'une des revendications 1 à 11, le centre de certification (CA) refusant la délivrance de tous les certificats numériques (CERT_1, ..., CERT_M) lorsqu'au moins une requête de signature (CSR_j) a été vérifiée négativement.

14. Appareil de mise à disposition inviolable de plusieurs certificats numériques pour plusieurs clés publiques (Kpub_1, ..., Kpub_M), l'appareil disposant de plusieurs applications et de plusieurs paires de clés avec respectivement une clé publique (Kpub_1, ..., Kpub_M) et une clé privée (Kpriv_1, ..., Kpriv_M) associée, différentes paires de clés étant utilisées pour les plusieurs applications, comportant :
- une unité de mémoire (31) qui est réalisée de manière à sauvegarder une pluralité de paires de clés avec respectivement une clé publique (Kpub_1, ..., Kpub_M) et une clé privée (Kpriv_1, ..., Kpriv_M) associée ;
- une unité de requête (32) qui est réalisée pour créer respectivement une requête de signature (CSR_1, ..., CSR_M) pour chacune de plusieurs clés publiques (Kpub_1, ..., Kpub_M) pour demander un certificat numérique (CERT_1, ..., CERT_M) et pour signer respectivement une requête de signature (CSR_i) pour la i^{ème} clé publique (Kpub_i) avec la j^{ème} clé privée (Kpriv_j) pour toutes les M clés publiques (Kpub_1, ..., Kpub_M) selon une règle de signature (SR), respectivement la j^{ème} clé privée (Kpriv_j) étant différente de la i^{ème} clé privée (Kpriv_i) associée à la i^{ème} clé publique (Kpub_i) ;
- envoi de toutes les requêtes de signature (CSR_1, ..., CSR_M) à un centre de certification (CA) respectivement identique ; et
- une unité d'émission (33) qui est réalisée de manière à envoyer toutes les requêtes de signature (CSR_1, ..., CSR_M) à un centre de certification (CA) respectivement identique, M étant le nombre de paires de clés resp. de requêtes de signature et i, j étant respectivement un élément de l'ensemble {1, .., M}.

15. Appareil selon la revendication 14, l'unité de mémoire (31), l'unité de requête (32) et l'unité d'émission (33) étant réalisées de manière à exécuter les étapes du procédé selon les revendications 3, 4, 5, 8, 9, 10.

16. Centre de certification pour la mise à disposition inviolable de plusieurs certificats numériques pour plusieurs clés publiques (Kpub_1, ..., Kpub_M) d'un appareil (D), l'appareil disposant de plusieurs applications et de plusieurs paires de clés avec respectivement une clé publique (Kpub_1, ..., Kpub_M) et une clé privée (Kpriv_1, ..., Kpriv_M) associée, différentes paires de clés étant utilisées pour les plusieurs applications, comportant :
- une unité de réception (35) qui est réalisée de manière à recevoir d'un appareil (D) respectivement une requête de signature (CSR_1, ..., CSR_M) pour chacune de plusieurs clés publiques (Kpub_1, ..., Kpub_M) pour demander un certificat numérique (CERT_1, ..., CERT_M) ;
- une unité de mémoire (36) qui est réalisée de manière à sauvegarder au moins une règle de signature (SR), la règle de signature (SR) indiquant que respectivement une requête de signature (CSR_i) est signée pour une i^{ème} clé publique (Kpub_i) avec la j^{ème} clé privée (Kpriv_j) pour toutes les M clés publiques (Kpub_1, ..., Kpub_M), respectivement la j^{ème} clé privée (Kpriv_j) étant différente de la i^{ème} clé privée (Kpriv_i) associée à la i^{ème} clé publique (Kpub_i) ;
- une unité de certification (37) qui est réalisée de manière à contrôler un message de requête de signature (CSR_i) quant à sa signature conformément à la règle de signature (SR), M étant le nombre de paires de clés resp. de requêtes de signature et i, j étant respectivement un élément de l'ensemble {l, .., M}.

17. Centre de certification selon la revendication 16, une unité de délivrance (38) étant réalisée de manière à délivrer respectivement un certificat numérique (CERT_1, ..., CERT_M) pour toutes les plusieurs clés publiques (Kpub_1, ..., Kpub_M) lorsque tous les messages de requête de signature (CSR_1, ..., CSR_M) ont été vérifiés positivement.

18. Centre de certification selon la revendication 16 ou 17, l'unité de réception (35), l'unité de mémoire (36), l'unité de certification (37) et l'unité de délivrance (38) étant réalisées pour exécuter les étapes selon la revendication 2, 6 à 13.

19. Système de mise à disposition de plusieurs certificats numériques pour plusieurs clés publiques (Kpub_1, ..., Kpub_M) d'un appareil (D), comprenant au moins un appareil (D) réalisé selon les revendications 14 et 15 et un centre de certification (CA) réalisé selon les revendications 16 à 18.

20. Programme informatique comprenant des instructions de programme pour exécuter le procédé selon les revendications 1 à 13.

21. Support de données qui sauvegarde le programme informatique selon la revendication 20.
